# EUROPEAN PATENT APPLICATION

(11) **EP 1 733 629 A1**
(43) Date of publication of application: **20.12.2006**
(21) Application number: 06253107.4
(22) Date of filing: 15.06.2006
(51) Int. Cl.: A23L 1/164, A23L 1/09, A23L 1/236

(54) **Reduced sugar RTE cereals with maltodextrin**

(30) Priority: 15.06.2005 US 153834
(71) Applicant: THE QUAKER OATS COMPANY, Chicago, Illinois 60661 (US)
(72) Inventor: Long, Carol, Cook, Illinois 60074 (US); Chatel, Robert, Cook, Illinois 60195 (US)
(74) Representative: MacLean, Martin Robert

(57) **Abstract**

The present invention relates to reduced sugar-content sugar-coated ready-to-eat (RTE) cereals and methods of their preparation. The RTE cereal has a sugar coating comprising from about 56% to about 70% sugar and from about 16% to about 28% maltodextrin. A method of preparing a reduced sugar-content sugar-coated RTE cereal includes providing a cereal base and forming a coating over the cereal base, the coating comprising on a dry weight basis from about 56% to about 70% sugar and from about 16% to about 28% maltodextrin. The coating may also include a fruit flavor and an acidulant. The method may also include drying the coated cereal and actively cooling the dried cereal below the coatings glass transition temperature while agitating the cereal so that the cooled RTE cereal does not form agglomerations of RTE cereal that do not break apart during packaging.

## Description

### Technical Field

The present invention relates to reduced sugar-content sugar-coated ready-to-eat cereals and methods of their preparation.

### Background of the Invention

Many consumers generally prefer sugar-coated ready-to-eat (RTE) cereals for their texture and sweetness. With sugar coatings, RTE cereals have the desired crunch and the desired long bowl life without excessive brittleness. Bowl life is a measure of how long an RTE cereal stays crunchy before becoming soggy.

However, some people especially parents have become concerned over the consumption of sugar-coated cereals. In particular, sugar, especially white sugar, is blamed rightly or wrongly for making children excessively energetic or even hyperactive.

One approach to reduce the sugar content of cereals is to use artificial sweeteners. However, artificial sweeteners do not provide the desired crunch and extended bowl life that consumers enjoy. Moreover, artificial sweeteners are disfavored by many consumers because they are artificial and because they have off-tastes or non-sucrose like sweetness profiles.

Thus, a need exists for a cereal with an extended bowl-life and desired crunchiness that uses less sugar without artificial sweeteners, yet has a similar sweetness profile to conventional sugar-coated cereals.

### Summary of the Invention

The present invention relates to a method of making a reduced sugar-content sugar-coated RTE cereal compared to a conventional sugar-coated cereal, yet having a substantially similar bowl life without the use of high intensity sweeteners. In particular, the method includes providing a cereal base, and forming a coating over the cereal base. The coating includes on a dry weight basis from about 56% to about 70% sugar and from about 16% to about 28% maltodextrin.

The present invention also relates to a reduced sugar-content sugar-coated cereal comprising a sugar coating of reduced sugar content on a cereal base. In one embodiment, the sugar coating comprises from about 56% to 70% sugar and about 16% to about 28% maltodextrin on a dry weight basis.

In accordance with another aspect of the invention, when a fruit flavor is present in the coating, a fruit acid is present in an amount sufficient to mask the reduced sweetness and to augment the fruit flavor. Typically, when used, the amount of fruit acid will be in the range of from about 0.3% to about 0.7% by weight of the total dry coating composition.

The present invention also relates to a method of making a reduced sugar cereal. An aqueous reduced sugar composition is applied to a cereal base. "Cereal base" means the cereal without the coating. The aqueous reduced sugar composition comprises from about 56% to 70% sugar and about 16% to 28% maltodextrin based on the total dry weight of the reduced sugar composition. Next, the aqueous reduced sugar composition is dried to form a coating on the cereal base. Finally, the dried cereal is actively cooled below the glass transition temperature of the coating while the dried cereal is agitated so that the cooled RTE cereal does not form agglomerations of RTE cereal that do not break apart during packaging.

### Detailed Description of the Invention

One aspect of the present invention is directed to a reduced sugar-content sugar-coated ready-to-eat (RTE) cereal. The coating comprises maltodextrin and sugar.

A conventional sugar coating can typically be composed of by dry weight in excess of 90% sugar. In the present invention, the sugar coating is about 56-70%, preferably about 58-68%, most preferably about 60-66% by dry weight sugar. In one embodiment, the sugar coating is about 60-67.2%, preferably about 62-67.2%, more preferably 65.8-67.2% by dry weight sugar. Sugar can be any bulk sugar suitable for use in a sugar coating, for example, sugar derived from cane, corn syrup, high fructose corn syrup, fructose, honey and tagatose. Preferably, the sugar is sucrose or sucrose combined with other sugars, such as brown sugar, for example.

In accordance with the invention, maltodextrin is used to replace at least some of the sugar of a conventional sugar coating while maintaining the crispy texture and bowl life that consumers seek. Preferably the coating includes on a dry weight basis of the total coating about 16-28%, preferably about 18-26%, and most preferably about 19.5-24.5% maltodextrin. Maltodextrin is made by hydrolysis of starch. The starch can come from any source. Maltodextrin includes, but is not limited to, fibersol and conventional maltodextrin. The maltodextrin may be branched or it may have a straight chain. The dextrose equivalent (DE) can be as high as 25. Preferably, the DE is less than 20. More preferably, the DE is within about 14 to about 16, and most preferably it is about 15. DEs higher than about 20 becoming increasingly difficult to use because, as the DE increases, the potential for the RTE cereal to agglomerate increases, which is an undesired result. Maltodextrins with a DE of 5 or lower may be used. However, as the DE decreases so does the sweetness of the maltodextrin used. Preferably, the DE is greater than 5.

The sugar coating of the present invention may also include other ingredients as desired. For example, the coating may also comprise oil and lecithin. Preferably, the oil is cottonseed oil or coconut oil. Preferably the oil is present in the coating in an amount ranging from about 5 to about 15 dry wt.% as the basis of the total coating, and more preferably from about 7.5 to about 11.5 dry wt.% of the total coating. Lecithin may also be used in an amount ranging from about 0.1 to about 6 dry wt% on the basis of the total coating.

In one embodiment, the reduced sugar content sugar coating of the present invention comprises sugar in an amount from about 23 to about 37%, and preferably from about 24.5 to about 35.2%; oil in an amount from about 2.5% to about 6.0%, and preferably from about 2.9 to about 5.8%, and maltodextrin in an amount from about 8.0% to about 11 % and preferably from about 9.1 % to about 10.2% based on the total dry weight of the coated RTE cereal. Preferably, the sugar comprises by dry weight of the total cereal composition from about 18% to about 26.5% and more preferably from about 18.5% to about 26.0% white sugar; and from about 5% to about 10.5% and more preferably from about 5.5% to about 10.0% brown sugar. Lecithin may also be used in an amount ranging from about 0.1 to about 6 wt% based on the total dry weight of the coated RTE cereal.

In another embodiment, the reduced sugar RTE cereal has 8 grams or less of sugar/ 26 gram serving. Conventional puffed sugar-coated RTE cereals typically have 12 grams or more of sugar/ 26 gram serving.

One aspect of the invention relates to masking the reduced sweetness of the RTE cereal of the present invention as compared to a conventional sugar-coated RTE cereal. In one embodiment, the flavor of the cereal is increased. This can be accomplished by using or increasing the amount of a fruit acid to accentuate the fruit flavors of a fruit flavored cereal. Alternatively, the amount of flavor can be increased or a stronger flavor system can be used. Suitable fruit acids can be selected from malic acid, citric acid, tartaric acid, and mixtures thereof.

Another aspect of the invention relates to increasing the sweetness of the sugar-reduced RTE cereal to match the sweetness of a conventional sugar-coated RTE cereal without the use of artificial sweeteners. One way to increase the sweetness is to use sugars having a higher sweetness than sucrose in the coating. Another way is to use taste modifiers that increase the perceived sweetness of the RTE cereal without contributing their own distinctive flavor to the coating.

Another aspect of the invention is directed to making a reduced sugar-content RTE cereal. An aqueous coating composition is prepared according to any method known in the art. A cereal base is fed into an enrober. The coating composition is sprayed onto the cereal base in the enrober. The enrobed cereal is then dried. Any oven suitable for drying enrobed cereals may be used. For example, a forced air conveyor dryer can be used.

After drying, the coated RTE cereal can be actively cooled until the RTE cereal is cooled below the glass transition temperature of the coating. To prevent the formation of agglomerations of RTE cereal that do not break apart during normal packaging operations, it is desirable to actively cool the RTE cereal while agitating it. Any type of equipment suitable for actively cooling dry food products while providing agitation may be used.

Active cooling is preferably performed by blowing air over, through or around the hot RTE cereal. Preferably the air for active cooling is cooled below ambient temperature before it is used to cool the hot RTE cereal.

The RTE cereal is actively cooled below the glass transition temperature of the coating. Preferably active cooling is stopped shortly after the glass transition temperature is reached. The glass transition temperature is in the range of about 120 to about 130°F for the preferred coatings of the invention. Most preferably the active cooling is stopped when the dried cereal has been cooled to a temperature of about 120°F. As the DE of the maltodextrin used increases, the glass transition temperature also decreases.

Any suitable method and device can be used for preventing or breaking up agglomerations of product as the product is cooled below the glass transition temperature. One suitable method comprises cooling the product to a temperature through the glass transition temperature while agitating the product sufficiently to prevent or break up agglomerations of the individual coated cereal pieces. Suitable agitation of the cereal pieces may be achieved by any suitable device. Suitable devices are known to those skilled in the art.

One suitable device is a reciprocating rake. The reciprocating rake spans the width of the belt or bed can be used. The rake has fingers which impact the RTE cereal thereby breaking up agglomerations of RTE cereal. Preferably there are two rakes located parallel and within a several feet of each other. The reciprocations of the rake can be in phase or out of phase. The reciprocating rake has a travel of several inches across a belt or bed that may be eight feet wide or more. The reciprocating rake moves perpendicular to the flow of the cereal pieces. The teeth of the rake are spaced several inches apart. At least one reciprocating rake is located where the cereal has a temperature at or near the glass transition temperature. If the most downstream rake is located too far upstream of where the cereal coating is at the glass transition temperature, the cereal pieces will have a tendency to reform agglomerations that do not break apart during subsequent handling.

Subsequent handling can include classifiers to remove objects that are of the wrong size or density. Subsequent handing can include packaging. The methods and devices for subsequent handling are well known in the art.

The present invention is further illustrated, but not limited by, the following examples.

### EXAMPLES

### Example 1

A crunchy RTE cereal having no added flavors was made. The RTE cereal had a semi-cubic pellet shape. An aqueous coating composition was prepared having the formula in Table 1. For reference, the formulation of a comparable conventional semi-cubic shaped RTE cereal is also provided.

**Table 1 ― Coating Composition**

| | Conventional Formula | | Reduced Sugar Formula | |
|---|---|---|---|---|
| Ingredients | % dry weight of coating | % dry weight of total cereal | % dry weight of coating | % dry weight of total cereal |
| White Sugar | 74.0 | 33.4 | 49.0 | 25.6 |
| Cottonseed Oil | 9.2 | 4.2 | 11.2 | 5.8 |
| Brown Sugar | 15.0 | 6.8 | 18.2 | 9.5 |
| Salt | 1.8 | 0.8 | 2.2 | 1.1 |
| Maltodextrin (15 DE) | | | 19.5 | 10.2 |

The coating was sprayed onto a puffed RTE cereal base in an enrober. The enrobed cereal was dried to a moisture content of 1.5-3.5%. The dried cereal was actively cooled to a temperature of 120°F using cooled air and agitated with reciprocating rakes.

### Example 2

A crunchy RTE cereal having a berry flavor was made in the same way as the RTE cereal of Example 1. The RTE cereal had a spherical pellet shape. An aqueous coating composition was prepared having the formula in Table 1. For reference, the formulation of a comparable conventional berry-flavored RTE cereal is also provided.

**Table 2 - Coating Composition**

| | Conventional Formula | | Reduced Sugar Formula | |
|---|---|---|---|---|
| Ingredients | % dry weight of coating | % dry weight of total cereal | % dry weight of coating | % dry weight of total cereal |
| White Sugar | 77.4 | 36.1 | 50.0 | 18.7 |
| Self-Manufactured Brown Sugar | 12.7 | 5.9 | 15.8 | 5.9 |
| Cottonseed Oil | 6.4 | 3.0 | 7.9 | 2.9 |
| Maltodextrin (15 DE) | | | 24.5 | 9.1 |
| Juice Concentrate - 5.12 Fold* | 0.2 | 0.1 | | |
| Sodium Citrate | 1.3 | 0.6 | | |
| Whey, Spray Dried | 1.3 | 0.6 | | |
| Original Flavor System | 0.6 | 0.3 | | |
| Reduced Sugar Flavor System | | | 1.3 | 0.5 |
| Malic Acid | 0.2 | 0.1 | 0.5 | 0.2 |

| | | | | |
|---|---|---|---|---|
| Note: *The juice concentrate is 5.12 times more concentratea than the original single strength juice. | | | | |

To mask the reduced sweetness of the cereal, more malic acid is used in the reduced sugar formulation than in the conventional formulation. The increased acidity helps accentuate the fruitiness of the flavor system used.

The conventional cereal also had a powder coating containing powdered sugar. The powdered coating was omitted from the reduced sugar-content RTE cereal. The RTE cereal of example 2 was coated and dried the same way as the cereal of example 1.

### Example 3

The RTE cereal from examples 1 and 2 were combined together to make a commercial product. The conventional commercial product contains 72% of the conventional semi-cubic shaped pellets and 28% of the conventional berry-flavored spherical pellets. To mask the reduced sweetness, the proportion of berry-flavored pellets was increased to 50% in the sugar-reduced commercial product.

While the invention has been described with respect to certain preferred embodiments, as will be appreciated by those skilled in the art, it is to be understood that the invention is capable of numerous changes, modifications and rearrangements and such changes, modifications and rearrangements are intended to be covered by the following claims.

## Claims

1. A method of making a reduced sugar-content sugar-coated ready-to-eat cereal, comprising:
providing a cereal base, and
forming a coating over the cereal base, the coating comprising on a dry weight basis of the total coating composition from about 56% to about 70% sugar and from about 16% to about 28% maltodextrin.

2. The method of Claim 1 further comprising masking the reduced sweetness of the reduced sugar-content sugar-coated cereal.

3. The method of Claim 2 wherein the masking comprises including a fruit flavour.

4. The method of Claim 2 or 3 wherein masking the reduced sweetness of the reduced sugar-content sugar-coated cereal comprises including an acidulant in the coating.

5. The method of Claim 2 wherein masking the reduced sweetness of the reduced sugar-content sugar-coated cereal comprises including a flavourant in the coating.

6. The method of any preceding claim wherein the sugar comprises sucrose.

7. A reduced sugar-content sugar-coated cereal comprising a sugar coating comprising from about 56% to about 70% sugar and from about 16% to about 28% maltodextrin.

8. The cereal of Claim 7, wherein the cereal comprises about 8 grams of sugar or less per serving.

9. The cereal of Claim 7 or 8, wherein the coating comprises by dry weight of the total cereal composition from about 8% to about 11% maltodextrin, from about 23% to about 37% sugar, and from about 2.5% to about 6% oil.

10. The cereal of Claim 9, wherein the sugar comprises by dry weight of the total cereal composition from about 18% to about 26.5% white sugar and from about 5% to about 10.5% brown sugar.

11. The cereal of any of Claims 7-10, wherein the coating further comprises lecithin in an amount from about 0.1% to about 3% by weight of the total cereal composition.

12. The cereal of Claim 9 or 10 wherein the oil is cottonseed oil.

13. The cereal of any of Claims 7-12 wherein the maltodextrin has a dextrose equivalence of from about 14 to about 16.

14. The cereal of any of Claims 7-13 further comprising a fruit flavour.

15. The cereal of any of Claims 7-14 further comprising an acidulant.

16. The cereal of Claim 15 wherein the acidulant is selected from the group consisting of malic acid, citric acid, tartaric acid and mixtures thereof.

17. A method of making a reduced sugar cereal comprising:
applying an aqueous reduced sugar composition to a cereal base, the aqueous reduced sugar composition comprising from about 56% to about 70% sugar and from about 16% to about 28% maltodextrin based on the total dry weight of the reduced sugar composition;
drying the aqueous reduced sugar composition to form a coating on the base cereal;
actively cooling the dried cereal below the glass transition temperature of the coating; and
agitating the cereal during active cooling, wherein the cooled RTE cereal does not form agglomerations of cereal that do not break apart during packaging.

18. The method of Claim 17 wherein agitating the cereal comprises reciprocating a rake substantially perpendicular to the flow of cereal so that the teeth of the rake impact the cereal.

19. The method of Claim 17 or 18 wherein applying the aqueous reduced sugar cereal coating to a cereal base comprises:
introducing the cereal base into an enrober; and
spraying the reduced sugar cereal coating onto the cereal base in the enrober.

20. The method of any of Claims 17-19 further comprising stopping actively cooling the dried cereal after the cereal has been cooled below 120°F.

21. The method of any of Claims 17-20 wherein actively cooling the dried cereal comprises:
cooling a gas below ambient temperature; and
blowing the cooled gas through, around, or over the dried cereal.

22. A reduce sugar-content sugar-coated ready-to-eat cereal obtainable by a method according to any of Claims 1-6 or 17-21.
